# FASCICULE DE BREVET EUROPEEN

(11) **EP 2 617 018 B1**
(45) Date de publication et mention de la délivrance du brevet: **11.11.2020**
(21) Numéro de dépôt: 11773082.0
(22) Date de dépôt: 14.09.2011
(51) Int. Cl.: G08B 17/107, G01N 21/53, G08B 29/04

(54) **CIRCUIT DE DÉTECTION DE FUMÉE, DETECTEUR DE FUMÉE LE COMPORTANT ET DISPOSITIF D'ALARME LES COMPORTANT**
RAUCHDETEKTORSCHALTUNG, RAUCHDETEKTOR MIT DIESER SCHALTUNG UND WARNGERÄT MIT DER SCHALTUNG UND DEM DETEKTOR
SMOKE DETECTION CIRCUIT, SMOKE DETECTOR COMPRISING SAID CIRCUIT AND ALARM DEVICE COMPRISING BOTH THE CIRCUIT AND THE DETECTOR

(30) Priorité: 14.09.2010 FR 1057338
(43) Date de publication de la demande: 24.07.2013
(73) Titulaire: FINSECUR, 92000 Nanterre (FR)
(72) Inventeur: PICHARD, Laurent, F-92000 Nanterre (FR); DI MARCO, Stéphane, F-92000 Nanterre (FR)
(74) Mandataire: Cornuejols, Georges
(86) Numéro de dépôt international: PCT/FR2011/052102
(87) Numéro de publication internationale: WO 2012/035259

(56) Documents cités:
- EP-A2- 1 253 566
- WO-A1-00/72282
- WO-A1-81/01765
- WO-A1-2009/036988
- US-A1- 2008 252 468
- US-A1- 2010 328 085

## Description

La présente invention concerne un circuit de détection de fumée, un détecteur de fumée le comportant et un dispositif d'alarme les comportant. Elle s'applique, en particulier, à la détection de fumées dans des bâtiments et ouvrages de travaux publics, publics ou privés, résidentiels, industriels, commerciaux ou de loisir.

On connaît de nombreux détecteurs de fumées. Le principe d'un détecteur optique de fumée à diffusion, par exemple, est basé sur la mise en œuvre, d'une part, d'un émetteur de rayonnements lumineux et, d'autre part, d'un récepteur des signaux lumineux diffusés par l'air ambiant. Lorsqu'il n'y a pas de fumée dans l'air qui pénètre dans le détecteur, le récepteur ne reçoit que très peu de lumière diffusée. Au contraire, lorsqu'il y a de la fumée dans l'air qui pénètre dans le détecteur, celle-ci diffuse la lumière provenant de l'émetteur et illumine ainsi le récepteur.

Pour réaliser de tels détecteurs de fumée, on positionne, sur un circuit imprimé, de manière oblique, en formant un angle d'environ 35 à 45 degrés avec ce circuit imprimé, chacun des composants émetteur (typiquement une diode électroluminescente) et récepteur (typiquement une photodiode ou un phototransistor).

Cependant, le positionnement de ces composants, qui est très difficile à réaliser et à tester, est la principale source de défauts de fabrication des détecteurs et impose un coût de fabrication élevé. Un défaut de positionnement peut provoquer soit une réflexion parasite aveuglant le composant récepteur, soit une réduction de sensibilité. De plus, la reproductibilité des positionnements de ces composants est faible, ce qui réduit la capacité d'établir une spécification précise des détecteurs de fumée qui les comportent. Enfin les fils qui relient ces composants au circuit imprimé agissent comme des antennes qui recueillent des signaux parasites réduisant ainsi la sensibilité du détecteur.

Afin de réduire ces effets parasites il a été proposé dans le document US Patent 5,138,302 de remplacer le récepteur par un composant monté directement sur le circuit imprimé et de recueillir la lumière diffusée par les particules de fumée en utilisant une lentille positionnée à proximité du récepteur. Cependant dans le dispositif proposé l'émetteur comporte des fils de connexion vers le circuit imprimé ce qui provoque de nombreux inconvénients par exemple difficulté de bien régler l'angle entre le faisceau émis et l'axe du récepteur, existence d'un effet d'antenne vers le circuit imprimé susceptible d'y amener des parasites ou encore impossibilité de bien définir la zone d'interaction. Les problèmes évoqués plus haut restent donc entiers.

Au final, une partie importante de la production de circuits est rejetée avant l'assemblage du détecteur, lorsque ce n'est pas le détecteur complet qui fait l'objet d'un rejet lors d'un test. En outre, le problème de positionnement des composants émetteur et récepteur rend difficile la mise en œuvre de composants montés en surface (« CMS ») car ils sont miniaturisés et donc encore plus sensibles à un défaut de positionnement.

On connaît aussi le document WO 2009/036988, qui présente un guide de radiation montable en surface adapté à être monté sur un émetteur de rayons lumineux. Cependant, le positionnement mécanique de ce guide de radiation reste un problème et un défaut de positionnement peut mener à une faible sensibilité du détecteur comportant deux tels guides de radiations en regard, respectivement, d'un émetteur et d'un récepteur. L'assemblage mécanique de deux guides impose la réalisation d'une pièce complexe, dont onéreuse, dans laquelle des rayons parasites peuvent aller de l'émetteur au récepteur et perturber la détection. Les documents EP 1 253 566, US 2008/252468, WO 81/01765 et US 2010/328085 présentent des inconvénients similaires.

La présente invention vise à remédier à tout ou partie de ces inconvénients.

A cet effet, selon un premier aspect, la présente invention vise détecteur optique de fumée à diffusion, en accord avec la revendication 1.

Grâce à ces dispositions, le positionnement des composants émetteur et récepteur de lumière est réalisé conjointement. Il est donc simplifié et la reproductibilité de la sensibilité du circuit électronique de détection de fumée est améliorée. De plus la reproductibilité des angles d'émission/réception des rayons de lumière est améliorée. La fabrication des réflecteurs de lumière est facilitée car ils peuvent être moulés conjointement à la liaison qui les relie.

Un autre problème qui se pose dans des détecteurs optiques concerne la détection des pannes et notamment de l'absence d'émission par un composant émetteur de lumière et/ou en cas de perte de sensibilité d'un composant récepteur de lumière. Or ces pannes sont critiques puisqu'elles limitent, voire interdisent la détection de fumée.

Dans des modes de réalisation particuliers, ladite liaison comprend un guide optique adapté à véhiculer une partie de la lumière émise par l'émetteur vers le récepteur, l'électronique de détection de fumée étant adaptée à détecter l'absence de réception, par ledit récepteur, de ladite partie de la lumière émise par l'émetteur et à émettre un signal représentatif de cette absence de réception.

Grâce à ces dispositions, une très faible partie de la lumière émise par l'émetteur parvient en permanence au récepteur. Lorsque l'on détecte que le récepteur n'émet plus de signal représentatif de cette partie ou émet un signal atténué, l'électronique signale une panne ou un dysfonctionnement du détecteur. La partie de la lumière qui parvient en permanence est calibrée pour être toujours inférieure au niveau de lumière requis pour la détection de la fumée afin que cette partie permanente ne perturbe pas la détection de fumée.

Dans des modes de réalisation, la liaison résistante au passage de la lumière est un guide optique brisé, une partie du guide optique brisé débouchant sur l'extérieur du détecteur optique.

Grâce à ces dispositions, on peut :
- vérifier le fonctionnement du composant émetteur en positionnant un composant récepteur externe, par exemple d'un boîtier mobile, en regard du lieu où débouche ledit guide optique,
- notamment dans le cas où le composant émetteur est susceptible d'émettre dans le domaine visible, communiquer au moins une information vers l'extérieur, comme, par exemple, signaler une détection de fumée ou une défaillance du circuit de détection de fumée et/ou
- communiquer avec le circuit de détection de fumée en émettant, par exemple avec une télécommande, un signal lumineux vers le lieu où débouche ledit guide optique.

Dans des modes de réalisation particuliers, la liaison résistante au passage de la lumière est un guide optique brisé, un guide optique formant chicane, un guide optique comprenant une zone absorbante de la lumière dans les longueurs d'onde des rayons lumineux émis par l'émetteur et/ou un guide optique comprenant une zone réfléchissante de la lumière dans les longueurs d'onde des rayons lumineux émis par l'émetteur.

Grâce à ces dispositions, les risques d'éclairage parasite du récepteur par l'intermédiaire de la fibre optique sont réduits.

Dans des modes de réalisation particuliers, la liaison résistante au passage de la lumière porte un plot de centrage.

Grâce à ces dispositions, le positionnement de la pièce unique comportant les prismes est reproductible et précis.

Dans des modes de réalisation particuliers, l'émetteur de lumière émet des rayons lumineux dont la longueur d'onde se situe dans l'infrarouge et au moins un prisme est en polycarbonate.

Grâce à ces dispositions, le récepteur n'est pas sensible à la lumière ambiante, ce qui réduit les risques de fausse alarme et la transmission des rayons lumineux est facilitée tant dans le prisme du côté de l'émetteur de lumière que dans le prisme du côté du récepteur de lumière.

Dans des modes de réalisation particuliers, le premier réflecteur de lumière comprend un réflecteur convergent agencé pour focaliser la lumière dans la zone de détection et/ou le deuxième réflecteur de lumière comprend un réflecteur convergent agencé pour focaliser vers le récepteur la lumière en provenance de la zone de détection.

Grâce à ces dispositions, la zone de détection, dans laquelle une éventuelle fumée à détecter est traversée par les rayons lumineux, est plus petite, ce qui réduit les risques de réflexion parasite et le niveau de bruit.

Dans des modes de réalisation particuliers, au moins un réflecteur est composé par une face d'un prisme optique et une autre face dudit prisme optique est sensiblement parallèle au plan du circuit imprimé.

Grâce à ces dispositions, le positionnement du réflecteur de lumière est aisé puisque la face du prisme parallèle au plan du circuit imprimé et en regard de l'un des composants émetteur ou récepteur est aisée à positionner.

Dans des modes de réalisation particuliers, au moins un prisme porte un plot de centrage. Grâce à ces dispositions, le positionnement des prismes sur une série de détecteurs optiques est reproductible.

Dans des modes de réalisation particuliers, le détecteur optique comprend, en outre :
- un boitier, pour loger le détecteur optique et agencé pour permettre le passage de l'air au travers de la zone de diffusion tout en minimisant l'introduction de lumière parasite dans ladite zone de diffusion ; et
- un support intermédiaire disposé dans le boitier et délimitant une zone de circuit qui loge le circuit imprimé, et la zone de diffusion, le support intermédiaire étant pourvu d'un paroi optique agencée pour, en absence de fumée dans la zone de diffusion, empêcher la lumière émise par l'émetteur d'atteindre le récepteur.

Dans des modes de réalisation particuliers, au moins un de l'émetteur et du récepteur de lumière est un composant monté en surface (« CMS »).

Grâce à ces dispositions, la surface du circuit imprimé est réduite, tous les composants électroniques portés par le circuit imprimé peuvent être des CMS, ce qui réduit le coût des composants et les coûts de fabrication du circuit imprimé.

Dans des modes de réalisation particuliers, le circuit imprimé comporte un plan de masse servant de protection électromagnétique du composant récepteur de lumière.

Grâce à ces dispositions, on réduit, voire on annule, le besoin d'une carcasse métallique sur ce composant ou dans le boîtier d'un détecteur de fumée.

Selon un deuxième aspect, la présente invention vise un dispositif d'alarme comportant au moins un détecteur de fumée objet de la présente invention, et un émetteur de signaux d'alarme dont l'émission de signaux d'alarme est représentatif de la détection de fumée par un dit détecteur de fumée.

Selon un troisième aspect, la présente invention vise un dispositif de fabrication simultanée de deux prismes réflecteurs pour un dispositif de détection de fumée comportant un cylindre d'injection et un moule d'injection de polymère, caractérisé en ce que ledit moule d'injection comporte au moins un canal d'alimentation reliant le nez d'un cylindre d'injection et l'entrée dans le moule, ladite entrée étant située dans la zone du moule qui correspond à une liaison entre les deux prismes.

Dans des modes de réalisation particuliers, ladite entrée se trouve dans la partie centrale de la zone du moule qui correspond à une liaison entre les deux prismes.

Selon un quatrième aspect, la présente invention vise un procédé de fabrication d'un détecteur optique de fumée à diffusion, qui comporte :
- une étape de d'injection dans un moule d'injection de polymère, ledit moule d'injection comportant au moins deux zones pour former deux prismes et un canal d'alimentation reliant le nez d'un cylindre d'injection et l'entrée dans le moule, ladite entrée étant située dans la zone du moule qui correspond à une liaison entre les deux prismes et
- une étape de montage de la pièce moulée comportant les deux prismes et la liaison entre les prismes sur un circuit imprimé formant support et comportant, en regard de l'un des dits prismes, un émetteur de lumière et, en regard de l'autre des dits prismes, un récepteur de lumière, sensible pour au moins une partie des longueurs d'onde des rayons lumineux émis par l'émetteur.

Dans des modes de réalisation particuliers, au cours de l'étape d'injection, on injecte, d'abord, un polymère au moins partiellement transparent pour les longueurs d'ondes mises en œuvre par l'émetteur et le récepteur, puis un polymère plus opaque pour lesdites longueurs d'ondes.

Grâce à chacune de ces dispositions, la matière constituant la carotte d'injection est utilisée ce qui, d'une part, évite des pertes de polymère et, d'autre part, permet d'éviter une opération d'ébarbage lors du démoulage des pièces mécaniques. Ce sont donc deux économies qui sont ainsi réalisées.

Selon un cinquième aspect, la présente invention vise un procédé de fabrication du détecteur optique comprenant une étape de fabrication selon le quatrième aspect de l'invention, une étape de montage de l'électronique de détection de fumée, de l'émetteur et du récepteur sur le circuit imprimé par soudage automatique par une machine de soudage de composants de surface; une étape de montage de la pièce mécanique sur le support intermédiaire ; et une étape de positionnement du circuit imprimé et du support intermédiaire dans le boitier.

Un sixième aspect de l'invention vise un appareil de fabrication pour la mise en œuvre du procédé de fabrication selon le cinquième aspect de l'invention.

Les avantages, buts et caractéristiques particulières de ce dispositif d'alarme, de ces procédés et de ces dispositifs de fabrication étant similaires à ceux du détecteur de fumée objet de la présente invention, ils ne sont pas rappelés ici.

D'autres avantages, buts et caractéristiques de la présente invention ressortiront de la description qui va suivre faite, dans un but explicatif et nullement limitatif en regard des dessins annexés, dans lesquels :
- la figure 1 représente, schématiquement et en vue en coupe, un circuit de détection de fumée et des guides de lumières selon un mode de réalisation particulier de la présente invention,
- la figure 2 représente, schématiquement et en vue de dessus, le circuit de détection de fumée illustré en figure 1,
- la figure 3 représente une vue en perspective, un mode de réalisation particulier de la pièce mécanique comportant les prismes ;
- la figure 4 représente, schématiquement et en vue de côté, un mode de réalisation particulier du détecteur de fumée objet de la présente invention ;
- la figure 5 représente une vue en perspective, un mode de réalisation particulier du support du détecteur de fumée ;
- la figure 6 représente une vue en perspective de l'autre surface du support de la figure 5 et
- la figure 7 représente, schématiquement et en vue de face, un mode de réalisation particulier d'un dispositif d'alarme objet de la présente invention.

Dans un but de clarté, les figures ne sont pas à l'échelle.

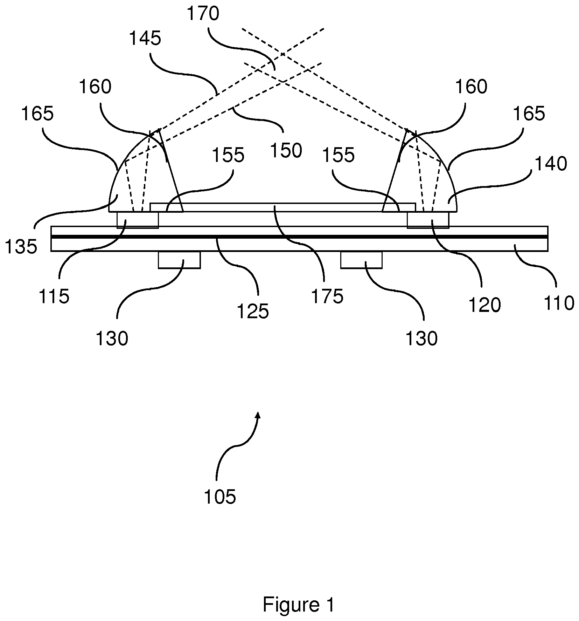

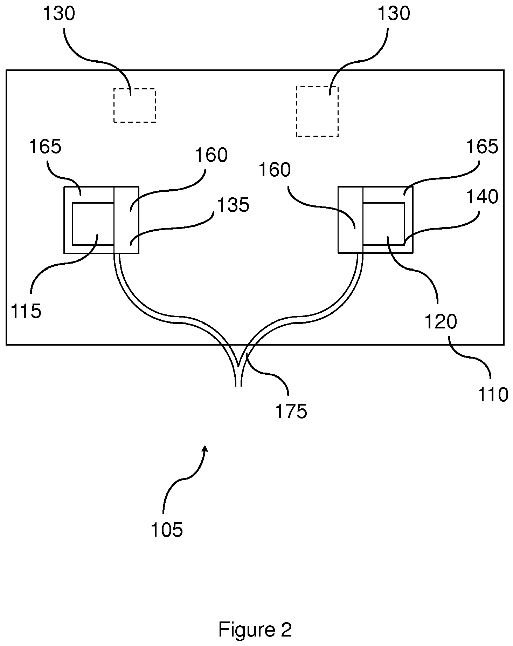

On observe, en figures 1 et 2, un circuit de détection de fumée 105 comportant un circuit imprimé 110 portant un composant émetteur de lumière 115, un composant récepteur de lumière 120, un plan de masse 125 et des composants d'alimentation et de traitement de signaux 130. Le circuit imprimé 110 est de type connu et adapté à porter des composants montés en surface CMS. Ces composants présentent l'avantage de pouvoir être montés et soudés de manière automatique sur le circuit imprimé en utilisant des machines de soudage automatique. L'émetteur et le récepteur de types CMS ont leurs axes optiques sensiblement parallèles entre eux et sensiblement perpendiculaires au circuit imprimé. Le plan de masse 125 est un plan métallique inséré dans la masse ou en surface du circuit imprimé 110. Dans le mode de réalisation décrit, ce plan de masse 125 forme une protection contre les émission électromagnétiques pour au moins le composant récepteur de lumière 120.

En regard des composants émetteur 115 et récepteur 120 sont positionnés deux réflecteurs de lumière, constitués ici des faces 165 de deux prismes 135 et 140. Le prisme 135 en regard de l'émetteur 115 est agencé pour diriger la lumière émise par l'émetteur 115 vers une zone de détection 170 ; et le prisme 140 en regard du récepteur 120 est agencé pour diriger, en présence de fumée dans la zone de détection 170, la lumière diffusée en provenance de ladite zone de détection 170, vers le récepteur 120. L'intersection du cône de lumière émise et du cône utile de réception définit une zone 170, appelée zone de détection.

Des rayons lumineux 145 et 150, utiles pour la détection de fumée, ainsi que la zone de détection 170 sont représentés en traits discontinus en figure 1. Chacun des prismes 135 et 140 présente une surface inférieure 155 sensiblement parallèle au plan du circuit imprimé 105, une surface latérale plane 160 oblique et une face courbe 165 formant miroir convergent.

Le composant émetteur de lumière 115 est, par exemple, une diode émettrice de lumière fonctionnant dans l'infrarouge. Le composant récepteur de lumière 120 est, par exemple, une photodiode ou un phototransistor fonctionnant dans les mêmes longueurs d'onde que le composant émetteur de lumière 115. Les composants d'alimentation et de traitement de signaux 130 sont adaptés, d'une part, à alimenter en électricité les composants 115 et 120 et, d'autre part, à traiter les signaux électriques sortant du composant récepteur de lumière 120 pour déterminer si de la fumée traverse la zone de détection 170. Ces composants 130 ainsi que leur liaison sont connus de l'homme du métier des détecteurs de fumée et ne sont donc pas plus décrits ici.

Les prismes 135 et 140 sont, par exemple, en polycarbonate. Ce matériau a l'avantage d'être, au moins partiellement, transparent dans une partie de l'infrarouge. Ainsi, le récepteur n'est pas sensible à la lumière ambiante, ce qui réduit les risques de fausse alarme et la transmission des rayons lumineux est facilitée tant dans le prisme du côté de l'émetteur de lumière que dans le prisme du côté du récepteur de lumière. Comme on le voit en figure 1, la forme de la face courbe 165 des prismes 135 et 140 et l'angle d'incidence des rayons lumineux 145 et 150 sur cette face courbe 165 en font un miroir convergent dont la longueur focale est sensiblement égale à la distance parcourue par le rayon lumineux central émis par le composant émetteur de lumière 115 avant d'atteindre la face courbe 165, multiplié par l'indice optique du matériau constituant le prisme.

De cette manière, les rayons lumineux sortant du prisme faisant face au composant émetteur de lumière 135 sont pratiquement parallèles.

Pour des raisons de symétrie, les rayons lumineux issus de la zone de détection 170 convergent, grâce à la face courbe 165 du prisme faisant face au composant récepteur de lumière 140, sur la partie sensible de ce composant 140.

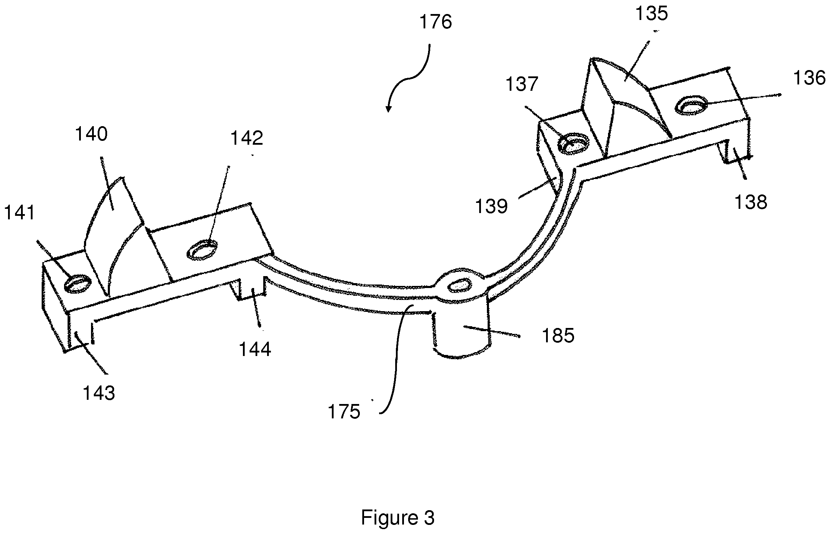

Comme illustré en figure 2 et en figure 3, les prismes 135 et 140 forment une pièce mécanique unique 176, une liaison 175 reliant, dans cette pièce unique 175, les prismes 135 et 140.

Dans des modes de réalisation particuliers, cette liaison comprend un guide optique qui véhicule une partie de la lumière émise par l'émetteur vers le récepteur, l'électronique de détection de fumée étant adaptée à détecter l'absence de réception, par ledit récepteur, de ladite partie de la lumière émise par l'émetteur et à émettre un signal représentatif de cette absence de réception. Ainsi, une très faible partie de la lumière émise par l'émetteur parvient en permanence au récepteur. Lorsque l'on détecte que le récepteur n'émet plus de signal représentatif de cette partie ou émet un signal atténué, l'électronique signale une panne ou un dysfonctionnement du détecteur. La partie de la lumière qui parvient en permanence est calibrée (par le biais de la géométrie de la pièce mécanique) pour être toujours inférieure au niveau de lumière requis pour la détection de la fumée afin que cette partie permanente ne perturbe pas la détection de fumée.

La mesure de la quantité de lumière arrivant en permanence sur le récepteur permet aussi de mesurer le vieillissement de l'émetteur et/ou du récepteur.

Le vieillissement ou une panne provoquent préférentiellement l'émission d'un signal, lumineux, sonore ou à un système central, représentatif du problème et du besoin d'effectuer des opérations de réparation ou de maintenance sur le détecteur de fumée.

Dans d'autres modes de réalisation, la liaison mécanique constitue un guide optique brisé 180 pour éviter que de la lumière parasite issue du composant émetteur 115 n'atteigne, par son biais, le composant récepteur 120. Ainsi, le premier réflecteur de lumière constitué par un face 165 du prisme 135 est relié au deuxième réflecteur de lumière, constitué par un face 165 du prisme 140, par l'intermédiaire d'une liaison résistante au passage de la lumière parasite pour former une seule pièce mécanique 176.

Dans d'autres modes de réalisation, la liaison entre les prismes 135 et 140 peut être constituée de tous autres moyens agencés de manière à éviter le passage de la lumière parasite issue de l'émetteur vers le récepteur. Par exemple la liaison peut être constituée par un guide optique comportant une zone centrale en forme de chicane, une zone absorbante de la lumière dans les longueurs d'onde des rayons lumineux émis par l'émetteur et/ou une zone réfléchissante de la lumière dans les longueurs d'onde des rayons lumineux émis par l'émetteur.

La pièce mécanique 176 peut, de manière avantageuse, être obtenue par injection dans un moule de polymère, par exemple du polycarbonate, en positionnant dans l'outil d'injection le trou par lequel la matière en fusion pénètre le moule dans la région correspondante à la zone centrale du guide optique brisé 180. Cela permet d'utiliser la carotte d'injection, constituée par la matière ayant rempli le canal d'alimentation entre le nez du cylindre d'injection et l'entrée dans le moule, pour réaliser le guide optique et ainsi d'économiser de la matière et d'éviter une opération supplémentaire, à savoir l'extraction des carottes, lors de la récupération des pièces injectées. Ces techniques d'injection sont connues de l'homme du métier du travail des polymères et ne sont donc pas plus décrites ici.

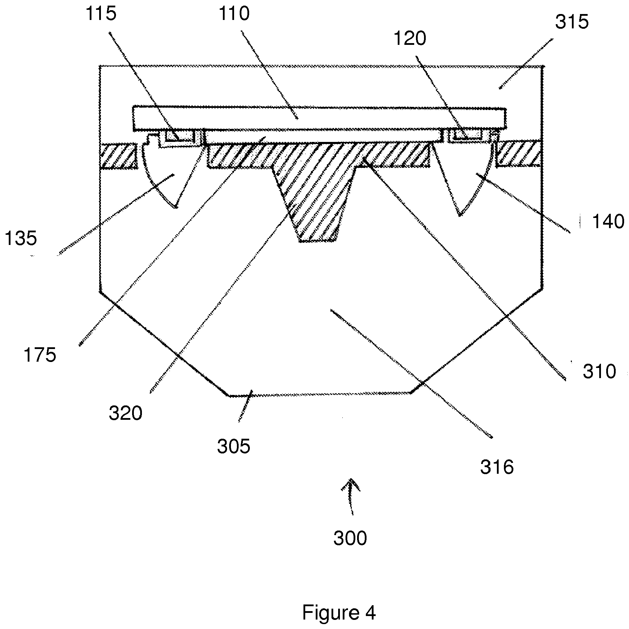

Comme illustré en figure 4, dans un mode de réalisation de l'invention un détecteur de fumée 300 comporte un boîtier 305, dans lequel est disposé le circuit de détection de fumée 105 et un support intermédiaire 310 délimitant dans le boîtier 305 deux zone séparés par le support : une zone de circuit 315 qui loge le circuit de détection de fumée et une zone de diffusion 316 accessible aux particules de fumée. Le boitier 305 présente des ouvertures en chicanes pour permettre le passage de l'air au travers la zone de diffusion 316 tout en minimisant la pénétration de lumière ambiante dans la zone de diffusion 316. Les parois internes du boîtier sont agencées pour refléter au minimum les rayons lumineux. Comme illustré en figure 4 la surface du support intermédiaire 310 du côté de la zone de diffusion 316 est pourvue d'une paroi optique 320 qui, en absence de fumée dans la zone de diffusion 316, empêche la lumière émise par l'émetteur 115, vers la zone de diffusion 316 via le prisme 135, d'atteindre le récepteur 120 via le prisme 140. La paroi optique 320 présente deux surfaces opposées 321, 322 crénelées pour refléter au minimum les rayons lumineux. Le prisme 135 en regard de l'émetteur 115 est positionnée de l'un des côtés de la paroi 320 et le prisme 140 en regard du récepteur 120 est disposé de l'autre côté de la paroi 320 de façon telle que des rayons lumineux ne puissent circuler de manière directe d'un prisme à l'autre. Le prisme 135 en regard de l'émetteur 115 focalise la lumière en un spot juste au dessus de la paroi 120. En présence des particules de fumée dans la zone de détection 170 la lumière est diffusée vers le prisme 140 en regard du récepteur 120 qui la récupère et l'envoie vers le récepteur 120.

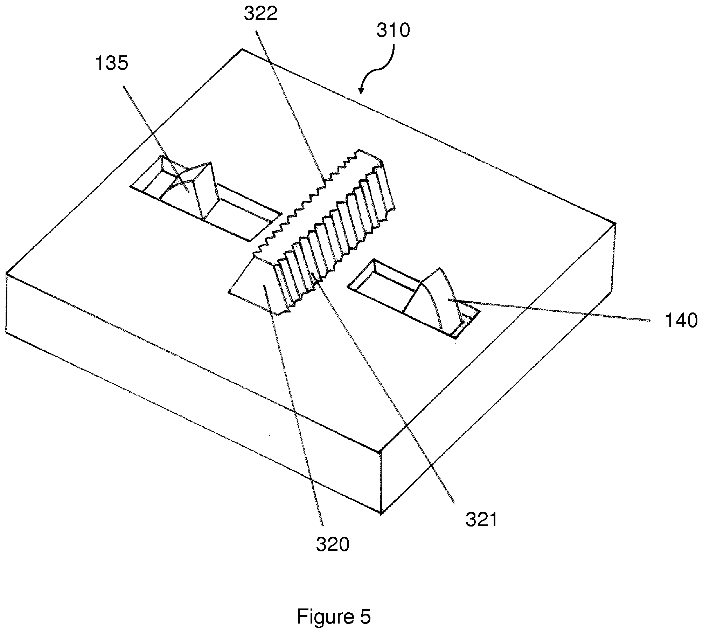

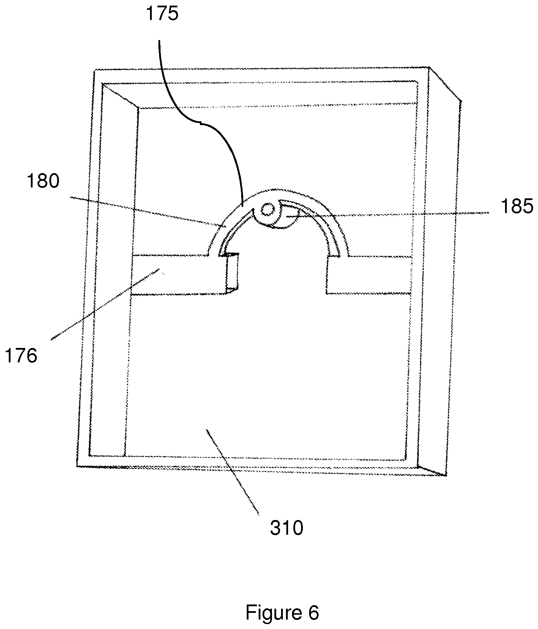

Dans le mode de réalisation illustré en Figure 3, en Figure 4, en Figure 5 et en Figure 6, la pièce mécanique 176 comportant les deux prismes 135, 140 est montée sur le support 310 de façon que la configuration du prisme 135 par rapport au prisme 140 soit fixée. La pièce mécanique 176 est pourvue d'un dispositif de positionnement précis vis à vis de du support intermédiaire 310, à savoir des plots de centrage destinés à coopérer avec des trous situés sur le support intermédiaire 310, des trous 141,142, 136, 137 destinés à coopérer avec des pions situés sur le support intermédiaire 310, ou des clips situés sur le support intermédiaire 310. Le positionnement des prismes est ainsi aisément reproductible. Cela permet d'assurer la reproductibilité des angles d'émission/réception des rayons de lumière.

Deux ouvertures 1350, 1400 dans la surface du support 310 permettent de positionner les deux prismes 135, 140 dans la zone de diffusion 116, le guide optique brisé 180 entre les deux prismes étant positionné sur l'autre coté du support dans la zone de circuit 315. Le support 310 est agencé de façon à empêcher le passage de la lumière parasite de la zone de circuit 315 à la zone de diffusion, sauf que par l'intermédiaire des prismes 135, 140.

Il peut être avantageux de prévoir sur la face située du coté du circuit imprimé des prismes 135 et 140 deux évasements plats afin de permettre le positionnement des émetteur 115 et récepteur 120 à l'intérieur de ces évasements, les prismes pouvant ainsi venir au contact du circuit imprimé.

Dans une variante, les prismes et /ou la pièce mécanique peuvent venir au contact du circuit imprimé en évitant les évasements ci-dessus mais en prévoyant des butées 143, 144, 138 et 139.

Dans le mode de réalisation illustré en figure 4 le circuit imprimé 110 est fixé au support intermédiaire 310 par des clips situés par exemple en périphérie de ce support intermédiaire. Ainsi les prismes optiques sont positionnés de manière précise vis à vis du support intermédiaire 310 qui est lui même positionné de manière précise vis à vis du circuit imprimé 110. Le positionnement des prismes sur une série de circuits imprimés est ainsi aisément reproductible.

Dans le mode de réalisation illustré en figures 1 et 2, la fibre optique 180 débouche sur l'extérieur du circuit électronique de détection de fumée.

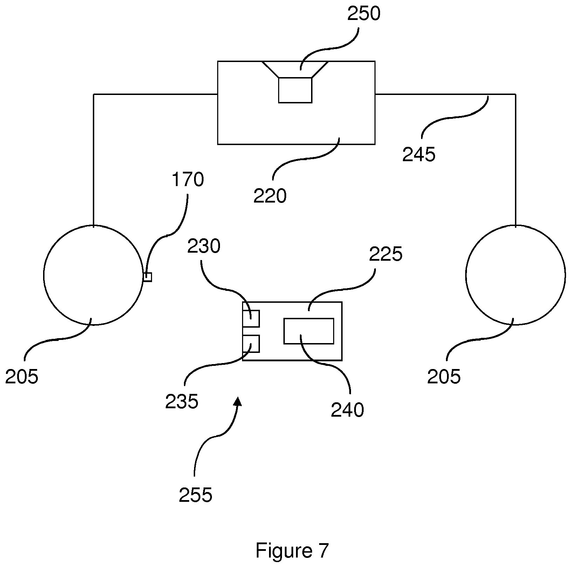

Ainsi, on peut :
- vérifier le fonctionnement du composant émetteur en positionnant un composant récepteur externe, par exemple d'un boîtier mobile 225 illustré en figure 7, en regard du lieu où débouche la fibre optique 180,
- notamment dans le cas où le composant émetteur est susceptible d'émettre dans le domaine visible, communiquer au moins une information vers l'extérieur, comme, par exemple, signaler une détection de fumée ou une défaillance du circuit de détection de fumée visuellement ou par l'intermédiaire d'un boîtier mobile 225 et/ou
- communiquer avec le circuit de détection de fumée en émettant, par exemple avec une télécommande 225 illustrée en figure 7, un signal lumineux vers le lieu où débouche la fibre optique.

Comme illustré en figure 7, un dispositif d'alarme 255 comporte au moins un détecteur de fumée 205 et, relié à chaque détecteur 205 par une liaison 245, filaire ou non, un émetteur de signaux d'alarme 220 dont l'émission de signaux d'alarme est représentatif de la détection de fumée par dit détecteur de fumée 205.

L'émetteur de signaux d'alarme 220 comporte, ici un haut-parleur 250.

Un boîtier mobile 225, faisant office de télécommande, comporte un émetteur de lumière 230 et un récepteur de lumière 235 aptes à être positionnés en regard de l'embouchure de la fibre optique 180, et un circuit de commande 240 de l'émetteur de lumière 230 et de traitement de signaux reçus par le récepteur de lumière 235.

Ce circuit de commande 240, par exemple un microprocesseur faisant fonctionner un programme informatique :
- vérifier le fonctionnement du composant émetteur,
- reçoit au moins une information du circuit de détection 105, par exemple l'état de sa batterie, le besoin de maintenance ou la date de dernière opération de maintenance ou une défaillance du circuit de détection de fumée et/ou
- communiquer avec le circuit de détection de fumée 105 en lui transmettant une requête ou une instruction, par exemple pour tester la connexion 245 et le déclenchement de l'émetteur 220.

Un procédé de fabrication particulier de la pièce mécanique comportant les prismes 135 et 140 consiste à faire fondre un polymère, par exemple du polycarbonate, à l'amener dans un cylindre d'injection et à l'introduire dans un moule ayant la forme de la dite pièce mécanique à travers au moins un canal d'alimentation. Préférentiellement, au moins un tel canal d'alimentation débouche dans la zone correspondante à la dite zone absorbante de la lumière de cette pièce mécanique.

Corrélativement, un dispositif de fabrication de la pièce mécanique comportant les prismes 135 et 140 comporte un moule d'injection de polymère, par exemple du polycarbonate, comprenant au moins un canal d'alimentation reliant le nez du cylindre d'injection et l'entrée dans le moule dans lequel cette entrée est située dans la zone qui correspond à la liaison entre les deux prismes et, de préférence, dans la partie centrale de cette zone ou dans la partie correspondante à la zone absorbante de la lumière.

Ainsi, la matière constituant la carotte d'injection est utilisée, ce qui d'une part évite des pertes de polymère et d'autre part permet d'éviter une opération d'ébarbage lors du démoulage des pièces mécaniques. Deux économies sont ainsi réalisées.

Bien entendu, l'invention n'est pas limitée aux exemples de réalisation ci-dessus décrits et représentés, à partir desquels on pourra prévoir d'autres modes et d'autres formes de réalisation sans pour autant sortir du cadre de l'invention.

Pour fabriquer un détecteur optique de fumée à diffusion qui comprend, en outre :
- un boitier, pour loger le détecteur optique et agencé pour permettre le passage de l'air au travers de la zone de diffusion tout en minimisant l'introduction de lumière parasite dans ladite zone de diffusion ; et
- un support intermédiaire disposé dans le boitier et délimitant une zone de circuit qui loge le circuit imprimé, et la zone de diffusion, le support intermédiaire étant pourvu d'une paroi optique agencée pour, en absence de fumée dans la zone de diffusion, empêcher la lumière émise par l'émetteur d'atteindre le récepteur ;
on met en œuvre les étapes suivantes :
- une étape de d'injection dans un moule d'injection de polymère, ledit moule d'injection comportant au moins deux zones pour former deux prismes et un canal d'alimentation reliant le nez d'un cylindre d'injection et l'entrée dans le moule, ladite entrée étant située dans la zone du moule qui correspond à une liaison entre les deux prismes ; préférentiellement, on injecte, d'abord, un polymère au moins partiellement transparent pour les longueurs d'ondes mises en œuvre par l'émetteur et le récepteur, puis un polymère opaque pour lesdites longueurs d'ondes,
- une étape de montage de l'électronique de détection de fumée, de l'émetteur et du récepteur sur le circuit imprimé par soudage automatique par une machine de soudage de composants de surface;
- une étape de montage de la pièce mécanique moulée, comportant les deux prismes et la liaison entre les prismes, sur le support intermédiaire et
- une étape de positionnement du circuit imprimé et du support intermédiaire dans le boitier pour que se trouve, en regard de l'un des prismes, l'émetteur de lumière et, en regard de l'autre des prismes, le récepteur de lumière.

## Revendications

1. Détecteur optique de fumée à diffusion (105, 205, 300), qui comporte :
- une zone de diffusion (170) accessible aux fumées ;
- un circuit imprimé (110) formant support et sur lequel est monté une électronique de détection de fumée ;
- un émetteur de lumière (115) monté sur ledit circuit imprimé,
- un récepteur de lumière (120), sensible pour au moins une partie des longueurs d'onde des rayons lumineux émis par l'émetteur, et monté sur ledit circuit imprimé,
- un premier réflecteur de lumière (135) en regard de l'émetteur pour diriger la lumière émise par l'émetteur vers une zone de détection dans la zone de diffusion ; et
- un deuxième réflecteur de lumière (140) en regard du récepteur pour diriger, en présence de fumée dans la zone de diffusion, la lumière diffusée en provenance de ladite zone de détection, vers le récepteur,
**caractérisé en ce que** le premier et le deuxième réflecteurs de lumière (135, 140) forment une pièce mécanique unique (176) avec une liaison (175, 310) partiellement opaque au passage de la lumière depuis le premier réflecteur de lumière (135) vers le deuxième réflecteur de lumière (140), ladite liaison comprenant un guide optique adapté à véhiculer vers le récepteur une partie de la lumière émise par l'émetteur (115), l'électronique de détection de fumée étant adaptée à détecter l'absence de réception, par ledit récepteur, de ladite partie de la lumière émise par l'émetteur et à émettre un signal représentatif de cette absence de réception.

2. Détecteur selon la revendication 1, dans lequel ladite liaison (175, 310) est un guide optique brisé, une partie du guide optique brisé débouchant sur l'extérieur du détecteur optique (105, 205, 300).

3. Détecteur selon l'une des revendications 1 ou 2, dans lequel ladite liaison (175, 310) est un guide optique brisé, un guide optique formant chicane, un guide optique comprenant une zone absorbante de la lumière dans les longueurs d'onde des rayons lumineux émis par l'émetteur (115) et/ou un guide optique comprenant une zone réfléchissante de la lumière dans les longueurs d'onde des rayons lumineux émis par l'émetteur.

4. Détecteur optique (105, 205, 300) selon l'une des revendications 1 à 3, dans lequel l'émetteur de lumière (115) émet des rayons lumineux dont la longueur d'onde se situe dans l'infrarouge et au moins un prisme (135, 140) est en polycarbonate.

5. Détecteur optique (105, 205, 300) selon l'une des revendications 1 à 4, dans lequel le premier réflecteur de lumière (135) comprend un réflecteur convergent (165) agencé pour focaliser la lumière dans la zone de détection et/ou le deuxième réflecteur de lumière (140) comprend un réflecteur convergent (165) agencé pour focaliser vers le récepteur (120) la lumière en provenance de la zone de détection.

6. Détecteur optique (105, 205, 300) selon l'une des revendications 1 à 5, dans lequel au moins un réflecteur (165) est composé par une face d'un prisme optique (135, 140).

7. Détecteur optique (105, 205, 300) selon la revendication 6, dans lequel une autre face dudit prisme optique (135, 140) est sensiblement parallèle au plan du circuit imprimé.

8. Détecteur selon l'une des revendications 6 ou 7, dans lequel la liaison (175, 310) et/ou au moins ledit prisme (135, 140) porte un plot de centrage (185).

9. Détecteur optique (105, 205, 300) selon l'une quelconque des revendications 1 à 8, comprenant en outre :
- un boitier (305), pour loger le détecteur optique et agencé pour permettre le passage de l'air au travers de la zone de diffusion tout en minimisant l'introduction de lumière parasite dans ladite zone de diffusion ; et
- un support intermédiaire (310) disposé dans le boitier et délimitant une zone de circuit qui loge le circuit imprimé, et la zone de diffusion (170), le support intermédiaire étant pourvu d'un paroi optique (320) agencée pour, en absence de fumée dans la zone de diffusion, empêcher la lumière émise par l'émetteur d'atteindre le récepteur.

10. Détecteur optique (105, 205, 300) selon l'une quelconque des revendications 1 à 9, dans lequel au moins un de l'émetteur (115) et du récepteur (120) de lumière est un composant monté en surface (« CMS »).

11. Détecteur optique (105, 205, 300) selon l'une quelconque des revendications 1 à 10, dans lequel le circuit imprimé (110) comporte un plan de masse servant de protection électromagnétique du composant récepteur de lumière (140).

12. Dispositif d'alarme (255) comportant au moins un détecteur de fumée (205) selon l'une quelconque des revendications 1 à 11, et un émetteur de signaux d'alarme (220) dont l'émission de signaux d'alarme est représentatif de la détection de fumée par un dit détecteur de fumée.

13. Dispositif de fabrication simultanée de deux prismes réflecteurs pour un détecteur optique de fumée selon l'une des revendications 1 à 12, qui comporte un cylindre d'injection et un moule d'injection de polymère, **caractérisé en ce que** ledit moule d'injection comporte au moins un canal d'alimentation reliant le nez d'un cylindre d'injection et l'entrée dans le moule, ladite entrée étant située dans la zone du moule qui correspond à une liaison optique entre les deux prismes.

14. Procédé de fabrication d'un détecteur optique de fumée à diffusion (105, 205, 300), selon l'une des revendications 1 à 12, qui comporte :
- une étape de d'injection dans un moule d'injection de polymère, ledit moule d'injection comportant au moins deux zones pour former deux prismes et un canal d'alimentation reliant le nez d'un cylindre d'injection et l'entrée dans le moule, ladite entrée étant située dans la zone du moule qui correspond à une liaison optique entre les deux prismes et
- une étape de montage de la pièce moulée comportant les deux prismes et la liaison entre les prismes sur un circuit imprimé formant support et comportant, en regard de l'un des dits prismes, un émetteur de lumière (115) et, en regard de l'autre des dits prismes, un récepteur de lumière (120), sensible pour au moins une partie des longueurs d'onde des rayons lumineux émis par l'émetteur.

15. Procédé selon la revendication 14, dans lequel au cours de l'étape d'injection, on injecte, d'abord, un polymère au moins partiellement transparent pour les longueurs d'ondes mises en œuvre par l'émetteur et le récepteur, puis un polymère plus opaque pour lesdites longueurs d'ondes.

## Patentansprüche

1. Optischer Diffusionsrauchdetektor (105, 205, 300), der aufweist:
- eine für Rauch zugängliche Diffusionszone (170);
- eine gedruckte Schaltung (110), die eine Unterlage bildet und auf der eine Rauchdetektionselektronik angebracht ist;
- einen Lichtsender (115), der auf der gedruckten Schaltung angebracht ist,
- einen Lichtempfänger (120), der für mindestens einen Teil der Wellenlängen der von dem Sender gesendeten Lichtstrahlen empfindlich und auf der gedruckten Schaltung angebracht ist,
- einen ersten Lichtreflektor (135), der dem Sender zugewandt ist, um das von dem Sender gesendete Licht zu einer Detektionszone in der Diffusionszone zu lenken; und
- einen zweiten Lichtreflektor (140), der dem Empfänger zugewandt ist, um bei Anwesenheit von Rauch in der Diffusionszone das gestreute Licht von der Detektionszone zum Empfänger zu lenken,
**dadurch gekennzeichnet, dass** der erste und der zweite Lichtreflektor (135, 140) ein einziges mechanisches Teil (176) mit einer teileweise opaken Verbindung (175, 310) beim Durchgang des Lichts vom ersten Lichtreflektor (135) zum zweiten Lichtreflektor (140) bilden, wobei die Verbindung einen Lichtleiter umfasst, der geeignet ist, einen Teil des von dem Sender (115) gesendeten Lichts zum Empfänger zu befördern, wobei die Rauchdetektionselektronik geeignet ist, die Abwesenheit von Empfang des Teils des von dem Sender gesendeten Lichts durch den Empfänger zu ermitteln und ein Signal zu senden, das für diese Empfangsabwesenheit repräsentativ ist.

2. Detektor nach Anspruch 1, wobei die Verbindung (175, 310) ein unterbrochener Lichtleiter ist, wobei ein Teil des unterbrochenen Lichtleiters außerhalb des optischen Detektors (105, 205, 300) ausmündet.

3. Detektor nach einem der Ansprüche 1 oder 2, wobei die Verbindung (175, 310) ein unterbrochener Lichtleiter, ein eine Schikane bildender Lichtleiter, ein Lichtleiter, der eine Absorptionszone des Lichts in den Wellenlängen der von dem Sender (115) gesendeten Lichtstrahlen und/oder ein Lichtleiter ist, der eine Reflexionszone des Lichts in den Wellenlängen der von dem Sender gesendeten Lichtstrahlen umfasst.

4. Optischer Detektor (105, 205, 300) nach einem der Ansprüche 1 bis 3, wobei der Lichtsender (115) Lichtstrahlen sendet, deren Wellenlänge im Infrarot liegt und mindestens ein Prisma (135, 140) aus Polycarbonat ist.

5. Optischer Detektor (105, 205, 300) nach einem der Ansprüche 1 bis 4, wobei der erste Lichtreflektor (135) einen konvergenten Reflektor (165) umfasst, der eingerichtet ist, um das Licht in der Detektionszone zu fokussieren, und/oder der zweite Lichtreflektor (140) einen konvergenten Reflektor (165) umfasst, der eingerichtet ist, um das von der Detektionszone kommende Licht zum Empfänger (120) zu fokussieren.

6. Optischer Detektor (105, 205, 300) nach einem der Ansprüche 1 bis 5, wobei mindestens ein Reflektor (165) durch eine Fläche eines optischen Prismas (135, 140) zusammengesetzt ist.

7. Optischer Detektor (105, 205, 300) nach Anspruch 6, wobei eine andere Fläche des optischen Prismas (135, 140) etwa parallel zur Ebene der gedruckten Schaltung ist.

8. Detektor nach einem der Ansprüche 6 oder 7, wobei die Verbindung (175, 310) und/oder mindestens das Prisma (135, 140) einen Zentrierstift (185) trägt.

9. Optischer Detektor (105, 205, 300) nach einem der Ansprüche 1 bis 8, umfassend ferner:
- ein Gehäuse (305), um den optischen Detektor unterzubringen und eingerichtet, um den Durchgang der Luft durch die Diffusionszone bei gleichzeitiger Minimierung des Einfalls von Störlicht in die Diffusionszone zu gestatten; und
- eine Zwischenlage (310), die in dem Gehäuse angeordnet ist und eine Schaltkreiszone begrenzt, in der die gedruckte Schaltung untergebracht ist, und die Diffusionszone (170), wobei die Zwischenlage mit einer optischen Wand (320) versehen ist, die eingerichtet ist, um bei Abwesenheit von Rauch in der Diffusionszone zu verhindern, dass das von dem Sender gesendete Licht den Empfänger erreicht.

10. Optischer Detektor (105, 205, 300) nach einem der Ansprüche 1 bis 9, wobei mindestens einer von dem Sender (115) und von dem Empfänger (120) von Licht ein oberflächenmontiertes Bauelement ("CMS") ist.

11. Optischer Detektor (105, 205, 300) nach einem der Ansprüche 1 bis 10, wobei die gedruckte Schaltung (110) einen Masseplan aufweist, der als elektromagnetischer Schutz der Lichtempfängerkomponente (140) dient.

12. Alarmvorrichtung (255), aufweisend mindestens einen Rauchdetektor (205) nach einem der Ansprüche 1 bis 11, und einen Alarmsignalsender (220), dessen Alarmsignalsendung für die Detektion von Rauch durch einen Rauchdetektor repräsentativ ist.

13. Vorrichtung für die gleichzeitige Herstellung von zwei Reflektorprismen für einen optischen Rauchdetektor nach einem der Ansprüche 1 bis 12, die einen Spritzzylinder und eine Spritzform von Polymer aufweist, **dadurch gekennzeichnet, dass** die Spritzform mindestens einen Versorgungskanal aufweist, der die Nase eines Spritzzylinders und den Eingang in die Form verbindet, wobei sich der Eingang in der Zone der Form befindet, die einer optischen Verbindung zwischen den zwei Prismen entspricht.

14. Verfahren zur Herstellung eines optischen Diffusionsrauchdetektors (105, 205, 300) nach einem der Ansprüche 1 bis 12, das aufweist:
- einen Schritt des Einspritzens von Polymer in eine Spritzform, wobei die Spritzform mindestens zwei Zonen aufweist, um zwei Prismen zu bilden und einen Versorgungskanal, der die Nase eines Spritzzylinders und den Eingang in die Form verbindet, wobei sich der Eingang in der Zone der Form befindet, die einer optischen Verbindung zwischen den zwei Prismen entspricht, und
- einen Schritt der Montage des geformten Teils, aufweisend die zwei Prismen und die Verbindung zwischen den Prismen, auf einer gedruckten Schaltung, die eine Unterlage bildet, und aufweisend, einem der Prismen zugewandt, einen Lichtsender (115), und dem anderen der Prismen zugewandt, einen Lichtempfänger (120), der für mindestens einen Teil der Wellenlängen der von dem Sender gesendeten Lichtstrahlen empfindlich ist.

15. Verfahren nach Anspruch 14, wobei beim Einspritzschritt zunächst ein für die Wellenlängen, die von dem Sender und von dem Empfänger umgesetzt werden, mindestens teilweise transparentes Polymer, dann ein für die Wellenlängen opakeres Polymer eingespritzt wird.

## Claims

1. Optical scattering-based smoke detector (105, 205, 300) that comprises:
a scattering zone (170) accessible to the smoke;
a printed circuit (110) forming a supporting member and on which an electronic smoke detection unit is mounted;
a light emitter (115) mounted on said printed circuit;
a light receiver (120), sensitive for at least some of the wavelengths of the light rays emitted by the emitter and mounted on said printed circuit;
a first light reflector (135) facing the emitter so as to direct the light emitted by the emitter into a detection zone in the scattering zone; and
a second light reflector (140) facing the receiver so as to direct, if there is smoke in the scattering zone, the scattered light coming from said detection zone onto the receiver;
**characterized in that** a single mechanical part (176) comprises the first and second light reflectors (135, 140) and a link (175, 310) resistant to the passage of the light from the first light reflector (135) to the second light reflector (140), said link comprising an optical guide designed to carry a portion of the light emitted by the emitter (115) to the receiver, the electronic smoke detection unit being designed to detect the absence of reception, by said receiver, of said portion of the light emitted by the emitter and to emit a signal representative of this absence of reception.

2. Detector according to claim 1, wherein said link (175, 310) is a split optical guide, a portion of the split optical guide emerging at the exterior of the optical detector (105, 205, 300).

3. Detector according to one of claims 1 or 2, wherein said link (175, 310) is a split optical guide, one optical guide forming a chicane, one optical guide comprising a zone absorbing light in the wavelengths of the light rays emitted by the emitter (115) and/or one optical guide comprising a zone reflecting light in the wavelengths of the light rays emitted by the emitter.

4. Optical detector (105, 205, 300) according to one of claims 1 to 3, wherein the light emitter (115) emits light rays with wavelengths in the infrared spectrum and at least one light reflector (135, 140) is made of polycarbonate.

5. Optical detector (105, 205, 300) according to one of claims 1 to 4, wherein the first light reflector (135) comprises a convergent reflector (165) arranged to focus the light in the detection zone and/or the second light reflector (140) comprises a convergent reflector (165) arranged to focus the light from the detection zone onto the receiver (120).

6. Optical detector (105, 205, 300) according to one of claims 1 to 5, wherein at least one reflector (165) consists of one surface of an optical prism.

7. Optical detector (105, 205, 300) according to claim 6, wherein another surface of said optical prism (135, 140) is substantially parallel to the plane of the printed circuit.

8. Detector according to one of claims 6 or 7, wherein the link (175, 310) and/or at least one prism (135, 140) bears a centering stud (185).

9. Optical detector (105, 205, 300) according to one of claims 1 to 8, further comprising:
- a casing (305) for housing the optical detector, arranged to allow air to pass through the scattering zone while minimizing the introduction of parasitic light into said scattering zone; and
- an intermediate supporting member (310) placed in the casing that delimits a circuit zone, which houses the printed circuit and the scattering zone (170), the intermediate supporting member being provided with an optical wall (320) arranged so that, if there is no smoke in the scattering zone, the light emitted by the emitter is prevented from reaching the receiver.

10. Optical detector (105, 205, 300) according to any one of claims 1 to 9, wherein at least one of the emitter (115) and the receiver (120) of light is a surface-mounted component ("SMC").

11. Optical detector (105, 205, 300) according to any one of claims 1 to 10, wherein the printed circuit (110) comprises a ground plane serving as electromagnetic protection for the light receiver component (140).

12. Alarm device (255) comprising at least one optical smoke detector (205) according to any one of claims 1 to 11, and an emitter (220) of alarm signals, wherein an emission of an alarm signal by the emitter of alarm signals is representative of the detection of smoke by a said smoke detector.

13. Device for simultaneously manufacturing two reflector prisms for a smoke detector device according to one of claims 1 to 12, comprising an injection cylinder and a polymer injection mold, **characterized in that** said injection mold comprises at least one feed channel linking the nose of an injection cylinder and the mold inlet, said inlet being located in the area of the mold that corresponds to a link between the two prisms.

14. Method of manufacturing an optical scattering-based smoke detector (105, 205, 300) according to one of claims 1 to 12, that comprises:
- a step of injecting polymer into an injection mold, said injection mold comprising at least two zones for forming two prisms and a feed channel linking the nose of an injection cylinder and the mold inlet, said inlet being located in the area of the mold that corresponds to a link between the two prisms and
- a step of mounting the molded part comprising the two prisms and the link between the prisms on a printed circuit forming a supporting member and comprising, facing one of said prisms, a light emitter (115) and, facing the other of said prisms, a light receiver (120) sensitive to at least one portion of the wavelengths of the light rays emitted by the emitter.

15. Method according to claim 14, wherein during the injection step, first of all a polymer is injected that is at least partially transparent to the wavelengths utilized by the emitter and the receiver, then a polymer more opaque to said wavelengths is injected.
